# EUROPEAN PATENT APPLICATION

(11) **EP 4 622 409 A1**
(43) Date of publication of application: **24.09.2025**
(21) Application number: 24777444.1
(22) Date of filing: 16.01.2024
(51) Int. Cl.: H05K 5/02

(54) **ELECTRONIC DEVICE HOUSING AND ELECTRONIC DEVICE**

(30) Priority: 27.03.2023 CN 202320694007 U
(71) Applicant: Huawei Technologies Co., Ltd., Shenzhen, Guangdong 518129 (CN)
(72) Inventor: XUE, Chao, Shenzhen, Guangdong 518129 (CN); SUN, Bingyang, Shenzhen, Guangdong 518129 (CN); YUAN, Shuai, Shenzhen, Guangdong 518129 (CN); ZHANG, Youliang, Shenzhen, Guangdong 518129 (CN)
(74) Representative: Goddar, Heinz J.
(86) International application number: PCT/CN2024/072623
(87) International publication number: WO 2024/198649

(57) **Abstract**

An electronic device housing and an electronic device are disclosed, to resolve a problem of a large size and large mass of the electronic device caused due to a thick electronic device housing. In the electronic device housing and the electronic device, a conductive sheet is plate-shaped and is formed through stamping. The conductive sheet is located in a housing wall of a housing body and forms, with the housing body, an integrated structure through insert injection molding. The conductive sheet includes an outer surface facing the outside of the housing body. A first blind hole is provided on an outer wall of the housing body, a hole bottom of the first blind hole is located on a part of the outer surface, and the outer surface corresponding to the hole bottom of the first blind hole is configured to connect to a charging device. The conductive sheet is further configured to electrically connect to a mainboard. In comparison with charging through a conductive post, the plate-shaped conductive sheet has a relatively small thickness, and the conductive sheet is located in the housing wall of the housing body, so that thicknesses of the housing body and the electronic device housing can be reduced, thereby reducing a size and mass of the electronic device.

## Description

This application claims priority to Chinese Patent Application No. 202320694007.2, filed with the China National Intellectual Property Administration on March 27, 2023 and entitled "ELECTRONIC DEVICE HOUSING AND ELECTRONIC DEVICE", which is incorporated herein by reference in its entirety.

### TECHNICAL FIELD

Embodiments of this application relate to the field of terminal device technologies, and specifically, to an electronic device housing and an electronic device.

### BACKGROUND

With gradual development of terminal device technologies, electronic devices such as bands and watches are gradually widely used. A conductive post is disposed on an electronic device housing. One end of the conductive post is located inside the electronic device housing, to connect to a mainboard inside the electronic device housing. The other end of the conductive post is exposed outside the electronic device housing, and is configured to connect to a charging device, to charge a battery of the electronic device through the conductive post. However, a length of the conductive post along a direction of a center line is relatively large, which results in a relatively thick electronic device housing. Consequently, a size and mass of the electronic device are relatively large.

### SUMMARY

Embodiments of this application provide an electronic device housing and an electronic device, to reduce a thickness of the electronic device housing, thereby reducing a size and mass of the electronic device.

According to a first aspect, an embodiment of this application provides an electronic device housing, including: a housing body and a conductive sheet. The housing body encloses an accommodating cavity, the accommodating cavity is configured to accommodate a mainboard of the electronic device. The conductive sheet is plate-shaped and is formed through stamping. The conductive sheet is located in a housing wall of the housing body and forms, with the housing body, an integrated structure through insert injection molding. The conductive sheet is configured to electrically connect to the mainboard. The conductive sheet includes an outer surface facing the outside of the housing body. A first blind hole is provided on an outer wall of the housing body, a hole bottom of the first blind hole is located on a part of the outer surface, and the outer surface corresponding to the hole bottom of the first blind hole is configured to connect to a charging device.

In this arrangement, the conductive sheet is plate-shaped and is formed through stamping. The conductive sheet is located in the housing wall of the housing body and forms, with the housing body, the integrated structure through insert injection molding. The conductive sheet includes the outer surface facing the outside of the housing body. The first blind hole is provided on the outer wall of the housing body, the hole bottom of the first blind hole is located on the part of the outer surface, and the outer surface corresponding to the hole bottom of the first blind hole is configured to connect to the charging device. The conductive sheet is further configured to electrically connect to the mainboard. In comparison with charging through a conductive post, the plate-shaped conductive sheet has a relatively small thickness, and the conductive sheet is located in the housing wall of the housing body, so that thicknesses of the housing body and the electronic device housing can be reduced, thereby reducing a size and mass of the electronic device.

In some embodiments that may include the foregoing embodiments, the conductive sheet further includes an inner surface facing the inside of the housing body. A second blind hole is provided on an inner wall of the housing body, and a hole bottom of the second blind hole is located on at least a part of the inner surface. The inner surface corresponding to the hole bottom of the second blind hole is configured to connect to the charging device. In this arrangement, the hole bottom of the second blind hole is located on the at least a part of the inner surface, so that the at least a part of the inner surface is exposed, and the inner surface corresponding to the hole bottom of the second blind hole is electrically connected to the mainboard, thereby facilitating connection between the mainboard and the conductive sheet.

In some embodiments that may include the foregoing embodiments, a protrusion is disposed on the inner surface, and the protrusion is configured to connect to the charging device. In this arrangement, a distance between the conductive sheet and the mainboard may be reduced, to facilitate connection between the mainboard and the conductive sheet. In some embodiments, the mainboard is connected to the inner surface by using an elastic contact part, and the elastic contact part may abut against the protrusion.

In some embodiments that may include the foregoing embodiments, the electronic device housing further includes a first filling adhesive, and the first filling adhesive is filled between the protrusion and a hole wall of the second blind hole. In this arrangement, connection strength between the conductive sheet and the housing body can be improved. In addition, the first filling adhesive can prevent external water or air from entering the accommodating cavity through the conductive sheet and the housing body, thereby improving sealing performance between the conductive sheet and the housing body.

In some embodiments that may include the foregoing embodiments, a conductive auxiliary layer is disposed on the protrusion, and a resistance of the conductive auxiliary layer is less than a resistance of the conductive sheet. In this arrangement, a connection resistance between the protrusion and the mainboard can be reduced. In an implementation in which the mainboard abuts against the protrusion by using the elastic contact part, a contact resistance between the elastic contact part and the protrusion may be reduced through the conductive auxiliary layer.

In some embodiments, the conductive auxiliary layer includes a gold layer or a silver layer. The connection resistance between the protrusion and the mainboard may be reduced due to low resistances of gold and silver. The conductive auxiliary layer may be formed on the protrusion through electroplating. In this case, usage of the conductive auxiliary layer is reduced, and it is ensured that a resistance of the conductive auxiliary layer is small, thereby reducing production costs of the electronic device housing. In addition, the conductive auxiliary layer including the gold layer or the silver layer may protect the conductive sheet, thereby avoiding a large resistance caused by corrosion of the conductive sheet.

In some embodiments that may include the foregoing embodiments, a groove facing the protrusion is provided on the outer surface. During stamping, a bump on a stamping die may abut against the outer surface, to form the protrusion on the inner surface and the groove on the outer surface. In this arrangement, no additional protrusion needs to be installed on the inner surface, further reducing manufacturing difficulty of the electronic device housing.

In some embodiments that may include the foregoing embodiments, the conductive sheet includes a first sheet body and a second sheet body connected to the first sheet body. The outer surface includes a first outer surface of the first sheet body, and the hole bottom of the first blind hole is located on a part of the first outer surface. The inner surface includes a first inner surface of the second sheet body, and the hole bottom of the second blind hole is located on a part of the first inner surface. In this arrangement, a first conductive sheet is connected to the charging device, a second conductive sheet is connected to the mainboard, and a position at which the conductive sheet is connected to the mainboard and a position at which the conductive sheet is connected to the charging device are spaced apart. This prevents the connection between the conductive sheet and the mainboard from being affected by deformation of the conductive sheet when the charging device is in contact with the conductive sheet.

In some embodiments that may include the foregoing embodiments, the inner surface further includes a second inner surface of the first sheet body, and the second inner surface is disposed opposite to the first outer surface. A third blind hole is provided on the inner wall of the housing body, and a hole bottom of the third blind hole is located on a part of the second inner surface.

In this arrangement, a projection of the third blind hole onto the first inner surface is located on the second inner surface, and an area of the projection of the third blind hole onto the second inner surface is smaller than an area of the second inner surface. In this arrangement, a part of the second inner surface located outside the third blind hole is still inserted in the housing body, to fasten the first sheet body to the housing body.

In addition, during insert injection molding, the first sheet body may be clamped by using a clamp, and then the first sheet body and the second sheet body are placed in a die for injection molding. The formed housing body wraps the first sheet body located outside the clamp. In this case, the first blind hole and the third blind hole may be formed at positions corresponding to the clamp. The third blind hole is provided, to facilitate fastening of the first sheet body during insert injection molding.

In some embodiments that may include the foregoing embodiments, the electronic device housing further includes a second filling adhesive, and the second filling adhesive is filled in the third blind hole. Connection strength between the first sheet body and the housing body may be improved through the third blind hole. In addition, the second filling adhesive may prevent external water or air from entering the accommodating cavity through the first sheet body and the housing body, thereby improving sealing performance between the conductive sheet and the housing body. In addition, the second filling adhesive may support the first sheet body, to avoid deformation of the first sheet body due to contact between the first sheet body and the charging device.

In some embodiments that may include the foregoing embodiments, a positioning hole is provided on the second sheet body. During insert injection molding, a positioning post is disposed in the die, and the positioning post passes through the positioning hole, to position the second sheet body. This improves position precision of the second sheet body, thereby improving position precision of the conductive sheet in the housing body, and improving manufacturing precision of the electronic device housing.

In some embodiments that may include the foregoing embodiments, the housing body includes a polyamide body and reinforcing fiber, and the reinforcing fiber is located in the polyamide body. The reinforcing fiber can improve the strength of the polyamide body, thereby improving strength of the housing body. This ensures that the housing body has sufficient strength, and the thickness of the housing body can be reduced, thereby reducing the mass and size of the electronic device. In addition, the housing body made of polyamide facilitates insert injection molding between the conductive sheet and the housing body.

In some embodiments that may include the foregoing embodiments, the reinforcing fiber includes glass fiber.

In some embodiments that may include the foregoing embodiments, the conductive sheet is a stainless steel sheet. The conductive sheet made of stainless steel has a relatively strong anti-corrosion capability, and can improve a service life of the conductive sheet.

According to a second aspect, an embodiment of this application further provides an electronic device, including a mainboard, a battery and an electronic device housing. The battery is electrically connected to the mainboard. The electronic device housing includes a housing body and a conductive sheet. The housing body encloses an accommodating cavity, and the mainboard and the battery are accommodated in the accommodating cavity. The conductive sheet is plate-shaped and is formed through stamping. The conductive sheet is located in a housing wall of the housing body and forms, with the housing body, an integrated structure through insert injection molding. The conductive sheet is electrically connected to the mainboard. The conductive sheet includes an outer surface facing the outside of the housing body. A first blind hole is provided on an outer wall of the housing body, a hole bottom of the first blind hole is located on a part of the outer surface, and the outer surface corresponding to the hole bottom of the first blind hole is configured to connect to a charging device.

In this arrangement, the conductive sheet is plate-shaped and is formed through stamping. The conductive sheet is located in the housing wall of the housing body and forms, with the housing body, the integrated structure through insert injection molding. The conductive sheet includes the outer surface facing the outside of the housing body. The first blind hole is provided on the outer wall of the housing body, the hole bottom of the first blind hole is located on the part of the outer surface, and the outer surface corresponding to the hole bottom of the first blind hole is configured to connect to the charging device. The conductive sheet is further configured to electrically connect to the mainboard. In comparison with charging through a conductive post, the plate-shaped conductive sheet has a relatively small thickness, and the conductive sheet is located in the housing wall of the housing body, so that thicknesses of the housing body and the electronic device housing can be reduced, thereby reducing a size and mass of the electronic device.

### BRIEF DESCRIPTION OF DRAWINGS

FIG. 1 is an exploded view 1 of an electronic device according to an embodiment of this application;
FIG. 2 is a main view of an electronic device according to an embodiment of this application;
FIG. 3 is an exploded view 2 of an electronic device according to an embodiment of this application;
FIG. 4 is a diagram of charging performed by an electronic device according to an embodiment of this application;
FIG. 5 is a rear view of an electronic device according to an embodiment of this application;
FIG. 6 is an axonometric view 1 of a rear cover in an electronic device housing according to an embodiment of this application;
FIG. 7 is a main view 1 of a rear cover in an electronic device housing according to an embodiment of this application;
FIG. 8 is a cross-sectional view of FIG. 7 in a direction A-A;
FIG. 9 is a partially enlarged view at A in FIG. 8;
FIG. 10 is an axonometric view 2 of a rear cover in an electronic device housing according to an embodiment of this application;
FIG. 11 is an axonometric view 3 of a rear cover in an electronic device housing according to an embodiment of this application;
FIG. 12 is a main view 2 of a rear cover in an electronic device housing according to an embodiment of this application;
FIG. 13 is a cross-sectional view of FIG. 12 in a direction B-B;
FIG. 14 is a partially enlarged view at B in FIG. 13;
FIG. 15 is a diagram 1 of a structure of a conductive post in a related technology;
FIG. 16 is a diagram 2 of a structure of a conductive post in a related technology;
FIG. 17 is an axonometric view 1 of a conductive sheet in an electronic device housing according to an embodiment of this application;
FIG. 18 is a diagram of a structure of an electronic device housing provided with a first filling adhesive according to an embodiment of this application; and
FIG. 19 is an axonometric view 2 of a conductive sheet in an electronic device housing according to an embodiment of this application.

### Reference numerals:

100: electronic device; 101: electronic device housing; 102: first watchband; 103: second watchband; 104: lock apparatus; 105: mainboard; 106: elastic contact part; 107: battery; 110: housing body; 111: middle frame; 112: accommodating cavity; 113: rear cover; 114: first filling adhesive; 115: second filling adhesive; 120: conductive sheet; 121: positive conductive sheet; 122: negative conductive sheet; 124: first sheet body; 125: second sheet body; 200: charging device; 201: positive contact part; 202: negative contact part; 130: conductive post; 140: sealing ring; 1021: lock ring; 1022: lock arm; 1031: lock hole; 1051: charging control chip; 1131: first blind hole; 1132: second blind hole; 1133: third blind hole; 1253: protrusion; 1254: groove; 1255: positioning hole; 1256: conductive auxiliary layer.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that, the described embodiments are merely some rather than all of embodiments of this application. All other embodiments obtained by a person of ordinary skill in the art based on embodiments of this application without creative efforts shall fall within the protection scope of this application.

It should be noted that, in the descriptions of embodiments of this application, unless otherwise specified and limited, the terms "interconnect" and "connect" should be understood in a broad sense. For example, the terms may indicate a fixed connection or an integral connection, may indicate a mechanical connection or an electrical connection, or may indicate a direct connection, an indirect connection through an intermediate medium, or internal communication between two components. A person skilled in the art may understand specific meanings of the terms in embodiments of this application based on a specific situation.

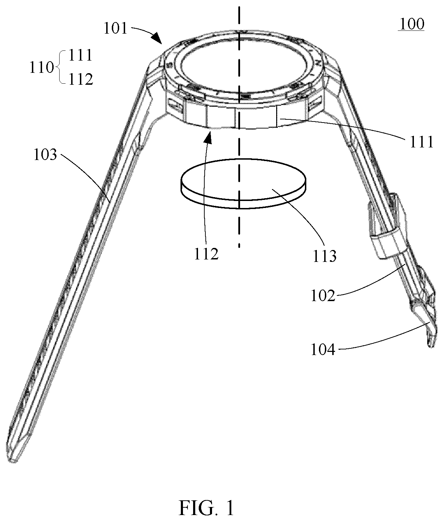

Refer to FIG. 1. An embodiment of this application provides an electronic device 100. The electronic device 100 may include a wearable device such as a watch, a band, or a wireless headset. This embodiment of this application is not limited thereto.

The electronic device 100 includes an electronic device housing 101, a mainboard, and a battery. The electronic device housing 101 encloses an accommodating cavity 112, the mainboard and the battery are both disposed in the accommodating cavity 112, and the battery is electrically connected to the mainboard to supply power to the mainboard. For example, the electronic device housing 101 may include a housing body 110, the housing body 110 may include a middle frame 111 and a rear cover 113, and the middle frame 111 encloses the accommodating cavity 112. A first window is provided at one end (an upper end in a position shown in FIG. 1) of the accommodating cavity 112 along a direction of a center line (a dashed line shown in FIG. 1) of the middle frame 111. A second window is provided at the other end (a lower end in the position shown in FIG. 1) of the accommodating cavity 112 along the direction of the center line of the middle frame 111. The rear cover 113 covers the other end of the middle frame 111, to seal the second window. For example, the rear cover 113 may be connected to the middle frame 111 through bolt connection, clamping, or the like. A connection relationship between the middle frame 111 and the rear cover 113 is not limited in this embodiment of this application.

In an implementation in which the electronic device 100 includes a watch, the electronic device 100 further includes a dial. The dial is disposed in the first window, to display information such as time through the dial. For example, the dial may include a display panel, the display panel is electrically connected to the mainboard, and the mainboard may control the display panel to display information such as time. It may be understood that the display panel may display an hour hand and a minute hand, and a user may determine current time through positions of the hour hand and the minute hand. Certainly, the display panel may alternatively directly display a number.

Certainly, the electronic device 100 may further include a drive motor. The drive motor is electrically connected to the mainboard, a second hand is disposed on a corresponding dial, the drive motor is in transmission connection to the second hand, and the mainboard controls the drive motor to drive the second hand to rotate. The electronic device 100 may further include a gear mechanism, and a minute hand and an hour hand may be further disposed on the dial. The drive motor is in transmission connection to the minute hand and the hour hand through the gear mechanism, to display current time by using the second hand, the minute hand, and the hour hand. It may be understood that a drive structure may include a plurality of gears that are engaged in sequence, and the minute hand and the hour hand may be connected to different gears, so that the minute hand rotates by 6° when the second hand rotates one circle. Similarly, the hour hand rotates by 30° when the minute hand rotates one circle.

In an implementation in which the electronic device 100 includes a band, the electronic device 100 further includes a display panel. The display panel is disposed in the first window, and the display panel is electrically connected to the mainboard 105, to control, by using the mainboard 105, the display panel to display an image.

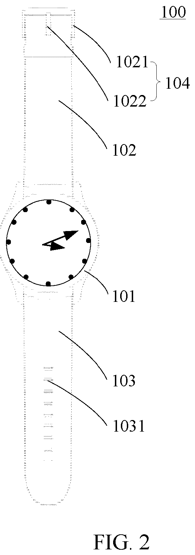

Refer to FIG. 2. In some embodiments, the electronic device 100 further includes a first watchband 102 and a second watchband 103. One end of the first watchband 102 is connected to one end of the middle frame 111, one end of the second watchband 103 is connected to the other end of the middle frame 111, and the first watchband 102 and the second watchband 103 are detachably connected. During use, the first watchband 102 and the second watchband 103 may be wound around a wrist of the user, and the first watchband 102 and the second watchband 103 are connected, to wear the electronic device 100 on the wrist of the user.

In the foregoing implementation, the first watchband 102 and the second watchband 103 may be detachably connected by using a lock apparatus 104. Correspondingly, the lock apparatus 104 includes a lock ring 1021 and a lock arm 1022. One end of the lock ring 1021 is connected to one end that is of the first watchband 102 and that is away from the middle frame 111. One end of the lock arm 1022 is hinged to the lock ring 1021. A plurality of lock holes 1031 are provided on the second watchband 103 at intervals along a length direction of the second watchband 103. During wearing, the second watchband 103 passes through the lock ring 1021, and the lock arm 1022 passes through one lock hole 1031, so that the first watchband 102 and the second watchband 103 are connected. The lock arm 1022 passes through different lock holes 1031, so that the electronic device 100 can adapt to wrists of different sizes.

Certainly, in another implementation, the first watchband 102 and the second watchband 103 may alternatively be connected by using a hook and loop tape. The hook and loop tape includes a first connection piece and a second connection piece, the first connection piece is attached to the first watchband 102, and fiber is provided on the first connection piece. The second connection piece is attached to the second watchband 103, and burrs are provided on the second connection piece. When the first connection piece is attached to the second connection piece, the burrs hook the fiber, so that the first connection piece and the second connection piece are connected.

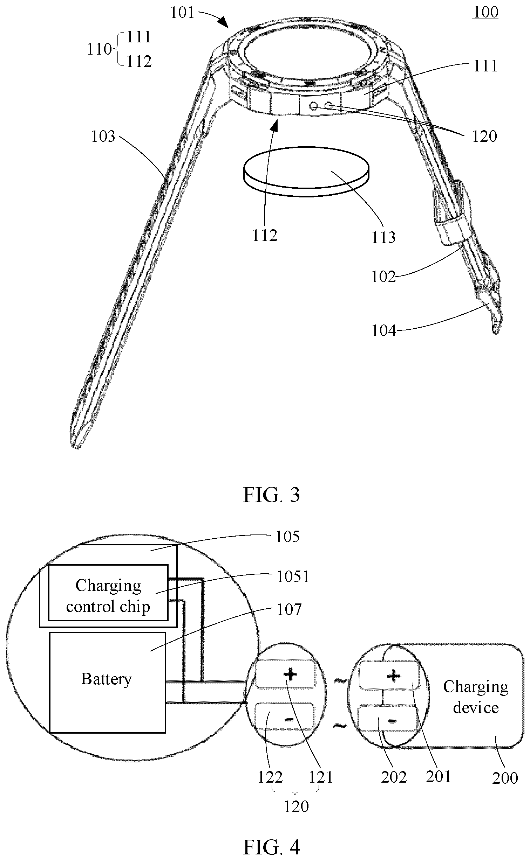

Refer to FIG. 3. In this embodiment of this application, the electronic device housing 101 further includes a conductive sheet 120. The conductive sheet 120 is disposed on the housing body 110, and the conductive sheet 120 is electrically connected to the mainboard. A charging device may be in contact with the conductive sheet 120, to charge the battery through the conductive sheet 120 and the mainboard. Refer to FIG. 4. For example, a charging control chip 1051 may be disposed on the mainboard 105. The charging control chip 1051 is electrically connected to the conductive sheet 120 and the battery 107, and the charging control chip 1051 may control the conductive sheet 120 to charge the battery 107. It may be understood that the conductive sheet 120 may include a positive conductive sheet 121 and a negative conductive sheet 122. A positive contact part 201 of the charging device 200 is in contact with the positive conductive sheet 121, and a negative contact part 202 of the charging device 200 is in contact with the negative conductive sheet 122, to charge the battery 107.

In this embodiment of this application, the electronic device 100 may include the charging device 200. For example, the electronic device 100 may include a watch and a charging device 200 configured to charge the watch, or the electronic device 100 includes a band and a charging device 200 configured to charge the band, or the electronic device 100 includes a wireless headset and a charging device 200 configured to charge the wireless headset. Certainly, the electronic device 100 may not include the charging device 200. This is not limited in this embodiment of this application.

In some embodiments, a magnet may be disposed on the charging device 200, and correspondingly, an attracting member may be disposed on the housing body 110 shown in FIG. 3. When the housing body 110 approaches the charging device 200, the magnet may attract the attracting member, so that the housing body 110 is attached to the charging device 200. In this case, the positive contact part 201 is in contact with the positive conductive sheet 121, and the negative contact part 202 is in contact with the negative conductive sheet 122, to avoid separation between the housing body 110 and the charging device 200 during charging, thereby avoiding charging interruption. A material of the attracting member may include a material that can be attracted by a magnet, such as a magnet or a steel sheet. It may be understood that the magnet may alternatively be disposed on the housing body 110, and correspondingly, the attracting member is disposed on the charging device 200. In this case, when the housing body 110 approaches the charging device 200, the housing body 110 and the charging device 200 may be attached together by magnetic force.

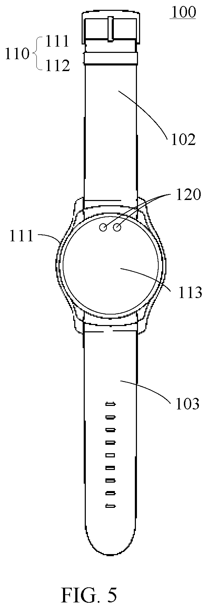

Still refer to FIG. 3. In this embodiment of this application, the conductive sheet 120 may be disposed on the middle frame 111. For example, the conductive sheet 120 may be disposed on a circumferential side wall that is of the middle frame 111 and that surrounds the center line of the middle frame 111. Refer to FIG. 5. Certainly, the conductive sheet 120 may alternatively be disposed on the rear cover 113. During wearing, the rear cover 113 faces the wrist of the user, and therefore, it is difficult to observe the conductive sheet 120, thereby improving decoration effect of the electronic device 100.

In the foregoing implementation, the conductive sheet 120 is plate-shaped and may be formed through stamping. In this arrangement, manufacturing difficulty and manufacturing costs of the conductive sheet 120 can be reduced.

The conductive sheet 120 is located in a housing wall of the housing body 110 and forms, with the housing body 110, an integrated structure through insert injection molding. To be specific, during manufacturing, the conductive sheet 120 is first manufactured, then the conductive sheet 120 is placed in a die, and the housing body 110 is formed through injection molding. The formed housing body 110 wraps the conductive sheet 120, so that the conductive sheet 120 is located in the housing wall of the housing body 110. In this arrangement, a connection between the housing body 110 and the conductive sheet 120 can be implemented while the housing body 110 is formed. This simplifies manufacturing difficulty of the electronic device housing 101 and improves a manufacturing speed of the electronic device housing 101.

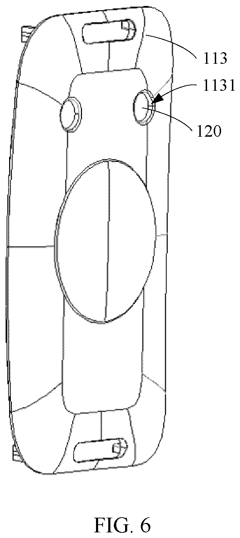

Refer to FIG. 6. The conductive sheet 120 includes an inner surface and an outer surface that are disposed opposite to each other. The inner surface is a surface that is of the conductive sheet 120 and that faces the inside of the housing body 110 (the accommodating cavity 112 shown in FIG. 1), and the outer surface is a surface that is of the conductive sheet 120 and that faces the outside of the housing body 110. A first blind hole 1131 is provided on an outer wall (a side wall that is of the housing body 110 and that is away from the accommodating cavity 112 shown in FIG. 1) of the housing body 110. A hole bottom of the first blind hole 1131 is located on a part of the outer surface, in other words, the part of the outer surface is used as the hole bottom of the first blind hole 1131, so that the outer surface corresponding to the hole bottom of the first blind hole 1131 is exposed. Correspondingly, the outer surface corresponding to the hole bottom of the first blind hole 1131 is configured to connect to the charging device 200 shown in FIG. 4.

In the foregoing implementation, the hole bottom of the first blind hole 1131 is located on the outer surface, in other words, the outer surface is located at the bottom of the first blind hole 1131, so that the conductive sheet 120 can be prevented from protruding from the housing wall of the housing body 110, thereby preventing the conductive sheet 120 from being scratched by an external object.

In this embodiment of this application, the conductive sheet 120 is electrically connected to the mainboard 105. When the charging device 200 is in contact with the outer surface, the battery 107 may be charged through the conductive sheet 120 and the mainboard 105.

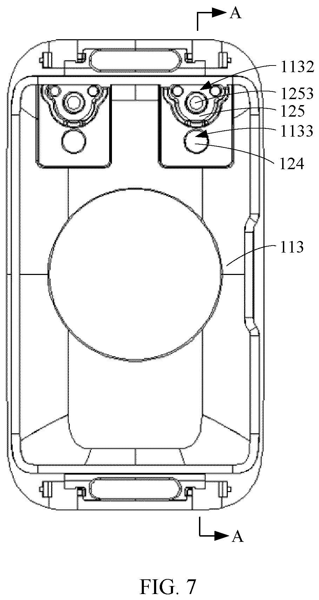

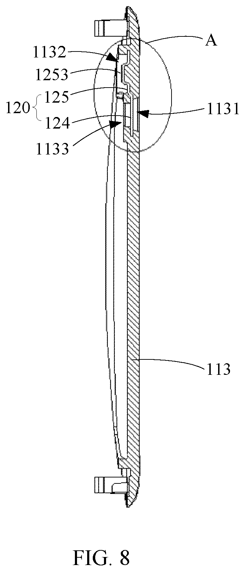

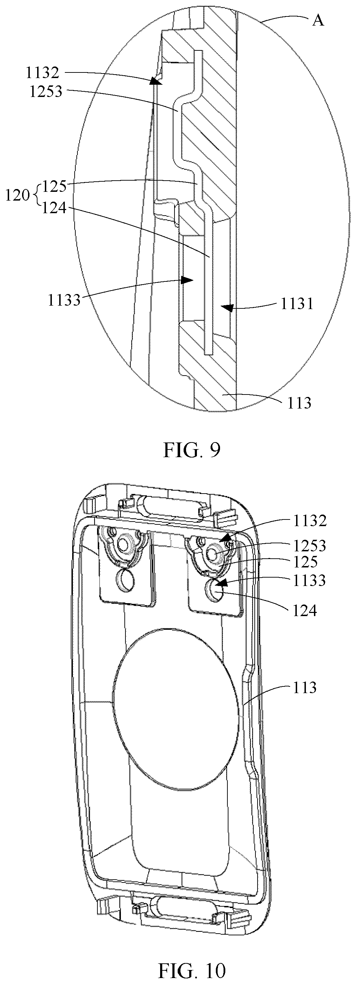

Refer to FIG. 7 to FIG. 9. FIG. 8 is a cross-sectional view of FIG. 7 in a direction A-A, and FIG. 9 is a partially enlarged view at A in FIG. 8. In some embodiments, the conductive sheet 120 further includes the inner surface facing the inside of the housing body 110. A second blind hole 1132 is provided on an inner wall (the housing wall facing the accommodating cavity 112 shown in FIG. 1) of the housing body 110, and a hole bottom of the second blind hole 1132 is located on at least a part of the inner surface. In other words, the at least a part of the inner surface is used as the hole bottom of the second blind hole 1132, that is, a projection of the second blind hole 1132 onto the inner surface covers the at least a part of the inner surface. For example, the projection of the second blind hole 1132 onto the inner surface may cover only a part of the inner surface. Certainly, the projection of the second blind hole 1132 onto the inner surface may alternatively cover the entire inner surface.

Refer to FIG. 10. The hole bottom of the second blind hole 1132 is located on the at least a part of the inner surface, so that the at least a part of the inner surface is exposed, and the inner surface corresponding to the hole bottom of the second blind hole 1132 is electrically connected to the mainboard 105, thereby facilitating connection between the mainboard 105 and the conductive sheet 120.

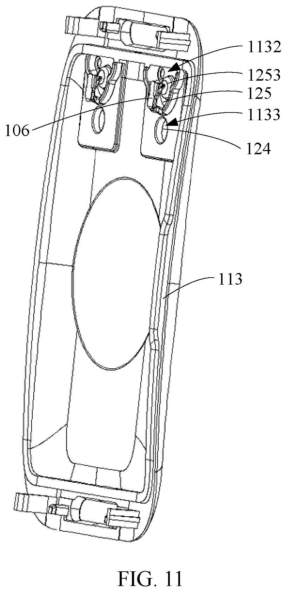

Refer to FIG. 11. In some embodiments, an elastic contact part 106 is disposed on the mainboard. The elastic contact part 106 extends toward the inner surface, and abuts against the inner surface, so that the conductive sheet 120 is electrically connected to the mainboard. For example, the elastic contact part 106 may include an elastic metal sheet. The elastic metal sheet is disposed on the mainboard and is electrically connected to the mainboard. The elastic metal sheet abuts against the inner surface under an action of elastic force of the elastic metal sheet, so that the conductive sheet 120 is electrically connected to the mainboard. Certainly, the elastic contact part 106 may further include a coil spring. One end of the coil spring is fastened to the mainboard and is electrically connected to the mainboard, and the other end of the coil spring abuts against the inner surface, so that the conductive sheet 120 is electrically connected to the mainboard.

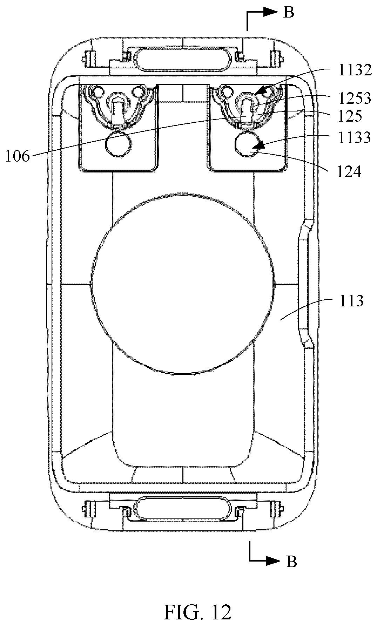

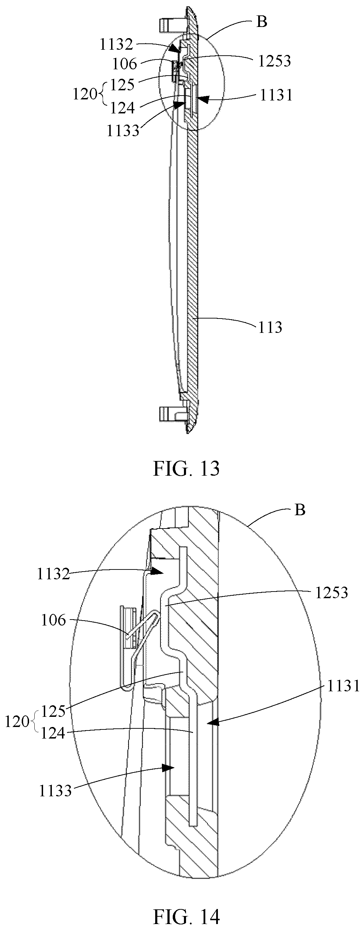

Refer to FIG. 12 to FIG. 14. FIG. 13 is a cross-sectional view of FIG. 12 in a direction B-B, and FIG. 14 is a partially enlarged view at B in FIG. 13. It may be understood that, in an implementation in which the conductive sheet 120 is disposed on the rear cover 113, when the rear cover 113 is installed on the middle frame 111, the elastic contact part 106 abuts against the inner surface, and it is ensured that the elastic contact part 106 is well connected to the inner surface under an action of elastic force of the elastic contact part 106. In an implementation in which the conductive sheet 120 is disposed on the middle frame 111, after the mainboard is installed in the accommodating cavity 112 shown in FIG. 1, the elastic contact part 106 abuts against the inner surface, and it is ensured that the elastic contact part 106 is well connected to the inner surface under an action of elastic force of the elastic contact part 106.

In this embodiment of this application, the conductive sheet 120 may include a copper sheet, a stainless steel sheet (such as 316 stainless steel or 304 stainless steel), an aluminum sheet, or the like. A material of the conductive sheet 120 is not limited in this embodiment of this application, provided that a current of the charging device 200 can be transferred to the mainboard, to charge the battery. It may be understood that, the conductive sheet 120 made of stainless steel has a relatively strong anti-corrosion capability, and can improve a service life of the conductive sheet 120.

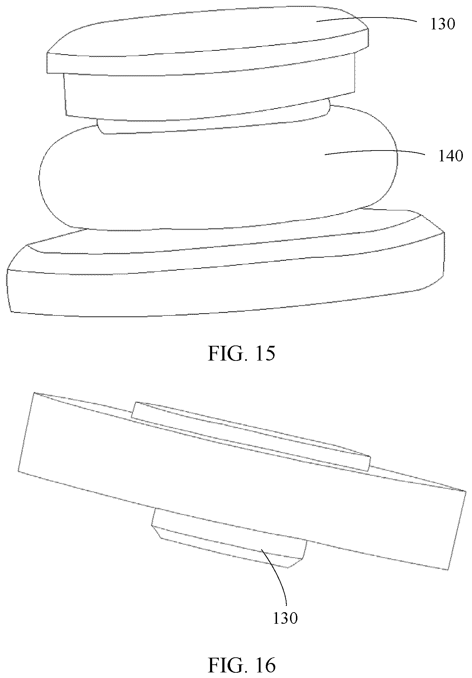

In a related technology shown in FIG. 15, a mounting hole is provided on an electronic device housing, and a conductive post 130 passes through the mounting hole. An end that is of the conductive post 130 and that faces an accommodating cavity is electrically connected to a mainboard, and the other end that is of the conductive post 130 and that faces the outside of a housing body is configured to connect to a charging device. In order to implement sealing between the conductive post 130 and the housing body, a sealing ring 140 may be sleeved on the conductive post 130.

In the related technology shown in FIG. 16, the conductive post 130 and the housing body form an integrated structure through insert injection molding. To be specific, the conductive post 130 is first manufactured, and then the conductive post 130 is placed in a die for injection molding, to form the housing body. It may be understood that the housing body wraps a part of the conductive post 130 to form the integrated structure. In this way, sealing performance between the conductive post 130 and the housing body can be improved.

In the foregoing related technology, the conductive post 130 is post-shaped, and the conductive post 130 is usually a metal post. Correspondingly, the conductive post 130 needs to be manufactured through cutting (turning, milling, or the like). As a result, a length of the conductive post 130 along a center line of the conductive post 130 is relatively large. In order to install the conductive post 130, a thickness of the housing body is usually set to be relatively large, causing a relatively large thickness of the housing body. Consequently, both a size and mass of an electronic device are relatively large. In addition, the conductive post 130 is manufactured through cutting, resulting in relatively difficult manufacturing of the housing body.

Refer to FIG. 9 and FIG. 10. In this embodiment of this application, the conductive sheet 120 is plate-shaped and is formed through stamping. The conductive sheet 120 is located in the housing wall of the housing body 110 shown in FIG. 5, and forms, with the housing body 110, the integrated structure through insert injection molding. The conductive sheet 120 includes the outer surface facing the outside of the housing body 110. The first blind hole 1131 is provided on the outer wall of the housing body 110, the hole bottom of the first blind hole 1131 is located on the part of the outer surface, and the outer surface corresponding to the hole bottom of the first blind hole 1131 is configured to connect to the charging device 200. The conductive sheet 120 is further configured to electrically connect to the mainboard. In comparison with charging through the conductive post 130 shown in FIG. 15 and FIG. 16, the plate-shaped conductive sheet 120 is relatively small in thickness, and the conductive sheet 120 is located in the housing wall of the housing body 110, so that a thickness of the housing body 110 can be reduced, thereby reducing a size and mass of the electronic device 100 shown in FIG. 5.

Moreover, the plate-shaped conductive sheet 120 is formed through stamping. In comparison with the conductive post 130 manufactured through cutting, the conductive sheet 120 is simpler in manufacturing, thereby reducing manufacturing difficulty and manufacturing costs of the electronic device housing 101. In addition, a manufacturing speed of the electronic device housing 101 is also improved. The conductive sheet 120 and the housing body 110 form the integrated structure through insert injection molding, so that the connection between the housing body 110 and the conductive sheet 120 can be implemented while the housing body 110 is formed. This further reduces manufacturing difficulty of the electronic device housing 101, and improves a manufacturing speed of the electronic device housing 101.

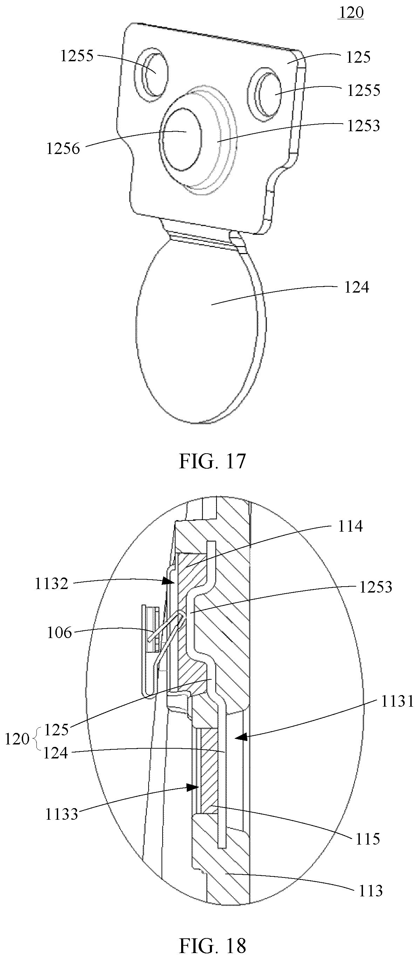

Refer to FIG. 14 and FIG. 17. In the foregoing implementation, a protrusion 1253 is disposed on the inner surface, and the protrusion 1253 is configured to connect to the charging device. In this arrangement, a distance between the conductive sheet 120 and the mainboard may be reduced, to facilitate connection between the mainboard and the conductive sheet 120. For example, in an implementation in which the mainboard 105 is connected to the inner surface by using the elastic contact part 106, the elastic contact part 106 may abut against the protrusion 1253.

Refer to FIG. 18. In this embodiment of this application, the electronic device housing 101 further includes a first filling adhesive 114, and the first filling adhesive 114 is filled between the protrusion 1253 and a hole wall of the second blind hole 1132. In this arrangement, connection strength between the conductive sheet 120 and the housing body 110 shown in FIG. 5 can be improved. In addition, the first filling adhesive 114 can prevent external water or air from entering the accommodating cavity 112 shown in FIG. 1 through the conductive sheet 120 and the housing body 110, thereby improving sealing performance between the conductive sheet 120 and the housing body 110.

For example, the first filling adhesive 114 may include a photosensitive adhesive (UV adhesive), a hot melt adhesive, or the like. This is not limited in this embodiment of this application.

Still refer to FIG. 17 and FIG. 18. In some implementations, a conductive auxiliary layer 1256 is disposed on the protrusion 1253, and a resistance of the conductive auxiliary layer 1256 is less than a resistance of the conductive sheet 120. In this arrangement, a connection resistance between the protrusion 1253 and the mainboard can be reduced. In an implementation in which the mainboard abuts against the protrusion 1253 by using the elastic contact part 106, a contact resistance between the elastic contact part 106 and the protrusion 1253 may be reduced through the conductive auxiliary layer 1256.

For example, the conductive auxiliary layer 1256 may include a gold layer or a silver layer. The connection resistance between the protrusion 1253 and the mainboard may be reduced due to low resistances of gold and silver. The conductive auxiliary layer 1256 may be formed on the protrusion 1253 through electroplating. In this case, usage of the conductive auxiliary layer 1256 is reduced, and it is ensured that a resistance of the conductive auxiliary layer 1256 is small, thereby reducing production costs of the electronic device housing 101 shown in FIG. 1. Certainly, the conductive auxiliary layer 1256 may alternatively be connected to the protrusion 1253 through welding. This is not limited in this embodiment of this application. In addition, the conductive auxiliary layer 1256 including the gold layer or the silver layer may protect the conductive sheet 120, thereby avoiding a large resistance caused by corrosion of the conductive sheet 120.

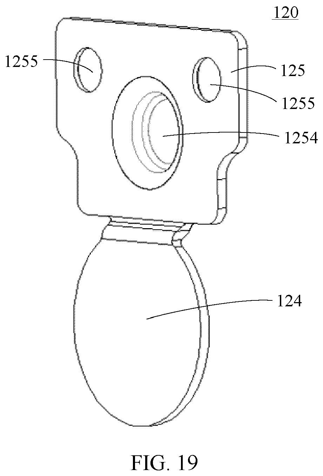

Refer to FIG. 19. In this embodiment of this application, a groove 1254 facing the protrusion 1253 is provided on the outer surface. During stamping, a bump on a stamping die may abut against the outer surface, to form the protrusion 1253 shown in FIG. 17 on the inner surface and the groove 1254 on the outer surface. In this arrangement, no additional protrusion 1253 needs to be installed on the inner surface, further reducing manufacturing difficulty of the electronic device housing 101.

Still refer to FIG. 17 and FIG. 18. In this embodiment of this application, the conductive sheet 120 includes a first sheet body 124 and a second sheet body 125, and the first sheet body 124 is connected to the second sheet body 125. Correspondingly, the outer surface may include a first outer surface of the first sheet body 124, and the hole bottom of the first blind hole 1131 is located on a part of the first outer surface. In other words, the charging device 200 is connected to the first outer surface of the first sheet body 124. The inner surface includes a first inner surface of the second sheet body 125, and the hole bottom of the second blind hole 1132 is located on a part of the first inner surface. In this arrangement, a first conductive sheet 120 is connected to the charging device, a second conductive sheet 120 is connected to the mainboard, and a position at which the conductive sheet 120 is connected to the mainboard and a position at which the conductive sheet 120 is connected to the charging device are spaced apart. This prevents the connection between the conductive sheet 120 and the mainboard from being affected by deformation of the conductive sheet 120 when the charging device is in contact with the conductive sheet 120.

It may be understood that, in the related technology shown in FIG. 15, one end of the conductive post 130 is configured to connect to the charging device, and the other end of the conductive post 130 is connected to the mainboard by using an elastic contact part. The elastic contact part is disposed along a direction of a center line of the conductive post 130. The conductive post 130 is usually disposed at an edge of a rear cover. In this case, a device with a large size on the mainboard needs to be disposed on a side that is of the conductive post 130 and that is close to a center line of the accommodating cavity. As a result, the device with a large size is limited in layout. Refer to FIG. 12 to FIG. 14. In the electronic device housing in this embodiment of this application, the second sheet body 125 is disposed close to an edge of the rear cover 113, and the second sheet body 125 is connected to the mainboard by using the elastic contact part 106, so that the elastic contact part 106 is closer to the edge of the rear cover 113, that is, the elastic contact part 106 is closer to the edge of the mainboard. A device with a large size may be disposed between the first sheet body 124 and the mainboard. In this way, layout space of the device with a large size is increased, layout limitation of the device with a large size is reduced.

For example, the first sheet body 124 and the second sheet body 125 may be connected through welding. Certainly, the first sheet body 124 and the second sheet body 125 may alternatively form an integrated structure through stamping, to further reduce manufacturing difficulty of the conductive sheet 120, and also further improve a manufacturing speed of the conductive sheet 120.

It may be understood that the hole bottom of the first blind hole 1131 is located on the part of the first outer surface, that is, a projection of the first blind hole 1131 onto the first outer surface is located on the first outer surface, and an area of the projection of the first blind hole 1131 onto the first outer surface is smaller than an area of the first outer surface. A part of the first outer surface located outside the first blind hole 1131 is still inserted in the housing body 110, to fasten the first sheet body 124 to the housing body 110.

For example, a cross-sectional shape of the first blind hole 1131 may be a regular shape such as a circle or a rectangle. Certainly, the cross-sectional shape of the first blind hole 1131 may alternatively be another irregular shape. This is not limited in this embodiment of this application.

Similarly, the hole bottom of the second blind hole 1132 is located on the part of the first inner surface, that is, a projection of the second blind hole 1132 onto the first inner surface is located on the first inner surface, and an area of the projection of the second blind hole 1132 onto the first inner surface is smaller than an area of the first inner surface. A part of the first inner surface located outside the second blind hole 1132 is still inserted in the housing body 110, to fasten the second sheet body 125 to the housing body 110.

Still refer to FIG. 12 to FIG. 14. In some embodiments, the inner surface further includes a second inner surface of the first sheet body 124, and the second inner surface is disposed opposite to the first outer surface. A third blind hole 1133 is provided on the inner wall of the housing body 110 (the rear cover 113), and a hole bottom of the third blind hole 1133 is located on a part of the second inner surface. In other words, a projection of the third blind hole 1133 onto the first inner surface is located on the second inner surface, and an area of the projection of the third blind hole 1133 onto the second inner surface is smaller than an area of the second inner surface. In this arrangement, a part of the second inner surface located outside the third blind hole 1133 is still inserted in the housing body 110, to fasten the first sheet body 124 to the housing body 110.

During insert injection molding, the first sheet body 124 may be clamped by using a clamp, and then the first sheet body 124 and the second sheet body 125 are placed in a die for injection molding. The formed housing body 110 wraps the first sheet body 124 located outside the clamp. In this case, the first blind hole 1131 and the third blind hole 1133 may be formed at positions corresponding to the clamp. The third blind hole 1133 is provided, to facilitate fastening of the first sheet body 124 during insert injection molding.

Still refer to FIG. 18. In the foregoing implementation, the electronic device housing further includes a second filling adhesive 115, and the second filling adhesive 115 is filled in the third blind hole 1133. Connection strength between the first sheet body 124 and the housing body 110 may be improved through the third blind hole 1133. In addition, the second filling adhesive 115 may prevent external water or air from entering the accommodating cavity 112 shown in FIG. 1 through the first sheet body 124 and the housing body 110 (the rear cover 113), thereby improving sealing performance between the conductive sheet 120 and the housing body 110. In addition, the second filling adhesive 115 may support the first sheet body 124, to avoid deformation of the first sheet body 124 due to contact between the first sheet body 124 and the charging device.

For example, the second filling adhesive 115 may include a photosensitive adhesive (UV adhesive), a hot melt adhesive, or the like. This is not limited in this embodiment of this application.

It may be understood that, a center line of the third blind hole 1133 may be collinear with a center line of the first blind hole 1131, and a cross-sectional area of the third blind hole 1133 is less than a cross-sectional area of the first blind hole 1131. That is, a hole wall of the third blind hole 1133 is closer to the center line than a hole wall of the first blind hole 1131. In this arrangement, the housing body 110 (the rear cover 113) between the hole wall of the third blind hole 1133 and the hole wall of the first blind hole 1131 can support the first sheet body 124, to avoid deformation of the first sheet body 124 when the charging device is in contact with the first sheet body 124.

Still refer to FIG. 19. In this embodiment of this application, a positioning hole 1255 is provided on the second sheet body 125. During insert injection molding, a positioning post is disposed in the die, and the positioning post passes through the positioning hole 1255, to position the second sheet body 125. This improves position precision of the second sheet body 125, thereby improving position precision of the conductive sheet 120 in the housing body, and improving manufacturing precision of the electronic device housing.

There may be a plurality of positioning holes 1255 provided at intervals. Correspondingly, a plurality of positioning posts are disposed on the die, and each positioning post passes through one positioning hole 1255. The plurality of positioning posts may position the second sheet body 125 at the same time, further improving the position precision of the conductive sheet 120.

Still refer to FIG. 5. In this embodiment of this application, a material of the housing body 110 may include a polyamide body and reinforcing fiber, and the reinforcing fiber is disposed in the polyamide body. In this arrangement, the polyamide (Polyamide, PA) has specific strength, and the reinforcing fiber can improve the strength of the polyamide body, thereby improving strength of the housing body 110. This ensures that the housing body 110 has sufficient strength, and the thickness of the housing body 110 can be reduced, thereby reducing the mass and size of the electronic device 100. In addition, the housing body 110 made of polyamide facilitates insert injection molding between the conductive sheet 120 and the housing body 110.

For example, the reinforcing fiber may include glass fiber, carbon fiber, or the like. A material of the reinforcing fiber is not limited in this embodiment of this application. It may be understood that the reinforcing fiber including the glass fiber can improve the strength of the housing body 110 and reduce production costs.

Finally, it should be noted that the foregoing embodiments are merely intended for describing the technical solutions of embodiments of this application but not for limiting this application. Although this application is described in detail with reference to the foregoing embodiments, a person of ordinary skill in the art should understand that modifications may still be made to the technical solutions described in the foregoing embodiments or equivalent replacements are made to some or all technical features thereof, without departing from the scope of the technical solutions of embodiments of this application.

## Claims

1. An electronic device housing, comprising:
a housing body, wherein the housing body encloses an accommodating cavity, and the accommodating cavity is configured to accommodate a mainboard of an electronic device; and
a conductive sheet, wherein the conductive sheet is plate-shaped and is formed through stamping, the conductive sheet is located in a housing wall of the housing body and forms, with the housing body, an integrated structure through insert injection molding, and the conductive sheet is configured to electrically connect to the mainboard, wherein
the conductive sheet comprises an outer surface facing the outside of the housing body, a first blind hole is provided on an outer wall of the housing body, a hole bottom of the first blind hole is located on a part of the outer surface, and the outer surface corresponding to the hole bottom of the first blind hole is configured to connect to a charging device.

2. The electronic device housing according to claim 1, wherein the conductive sheet further comprises an inner surface facing the inside of the housing body, a second blind hole is provided on an inner wall of the housing body, a hole bottom of the second blind hole is located on at least a part of the inner surface, and the inner surface corresponding to the hole bottom of the second blind hole is configured to connect to the charging device.

3. The electronic device housing according to claim 2, wherein a protrusion is disposed on the inner surface, and the protrusion is configured to connect to the charging device.

4. The electronic device housing according to claim 3, wherein the electronic device housing further comprises a first filling adhesive, and the first filling adhesive is filled between the protrusion and a hole wall of the second blind hole.

5. The electronic device housing according to claim 3 or 4, wherein a conductive auxiliary layer is disposed on the protrusion, and a resistance of the conductive auxiliary layer is less than a resistance of the conductive sheet.

6. The electronic device housing according to claim 5, wherein the conductive auxiliary layer comprises a gold layer or a silver layer.

7. The electronic device housing according to any one of claims 3 to 6, wherein a groove facing the protrusion is provided on the outer surface.

8. The electronic device housing according to any one of claims 2 to 7, wherein the conductive sheet comprises a first sheet body and a second sheet body connected to the first sheet body, the outer surface comprises a first outer surface of the first sheet body, the hole bottom of the first blind hole is located on a part of the first outer surface, the inner surface comprises a first inner surface of the second sheet body, and the hole bottom of the second blind hole is located on a part of the first inner surface.

9. The electronic device housing according to claim 8, wherein the inner surface further comprises a second inner surface of the first sheet body, the second inner surface is disposed opposite to the first outer surface, a third blind hole is provided on the inner wall of the housing body, and a hole bottom of the third blind hole is located on a part of the second inner surface; and
the electronic device housing further comprises a second filling adhesive, and the second filling adhesive is filled in the third blind hole.

10. The electronic device housing according to claim 8 or 9, wherein a positioning hole is provided on the second sheet body.

11. The electronic device housing according to any one of claims 1 to 10, wherein the housing body comprises a polyamide body and reinforcing fiber, and the reinforcing fiber is located in the polyamide body.

12. The electronic device housing according to claim 11, wherein the reinforcing fiber comprises glass fiber.

13. The electronic device housing according to any one of claims 1 to 12, wherein the conductive sheet is a stainless steel sheet.

14. An electronic device, comprising:
a mainboard;
a battery, wherein the battery is electrically connected to the mainboard; and
an electronic device housing, wherein the electronic device housing comprises:
a housing body, wherein the housing body encloses an accommodating cavity, and the mainboard and the battery are accommodated in the accommodating cavity; and
a conductive sheet, wherein the conductive sheet is plate-shaped and is formed through stamping, the conductive sheet is located in a housing wall of the housing body and forms, with the housing body, an integrated structure through insert injection molding, and the conductive sheet is electrically connected to the mainboard, wherein
the conductive sheet comprises an outer surface facing the outside of the housing body, a first blind hole is provided on an outer wall of the housing body, a hole bottom of the first blind hole is located on a part of the outer surface, and the outer surface corresponding to the hole bottom of the first blind hole is configured to connect to a charging device.
